# NEUE EUROPÄISCHE PATENTSCHRIFT

(11) **EP 1 775 484 B2**
(45) Veröffentlichungstag und Bekanntmachung des Hinweises auf die Entscheidung über den Einspruch: **20.01.2016**
(45) Hinweis auf die Patenterteilung: 30.12.2009
(21) Anmeldenummer: 06118986.6
(22) Anmeldetag: 16.08.2006
(51) Int. Cl.: F16C 9/02, F16C 19/44, F16C 33/58, F16C 33/66

(54) **Radiallagerung**
Radial bearing
Palier radial

(30) Priorität: 13.10.2005 US 726253 P
(43) Veröffentlichungstag der Anmeldung: 18.04.2007
(60) Teilanmeldung: 08017532.6
(73) Patentinhaber: Schaeffler Technologies AG & Co. KG, 91074 Herzogenaurach (DE)
(72) Erfinder: Tisch, Siegfried, 70839 Gerlingen (DE); Solfrank, Peter, 96158 Frensdorf (DE)

(56) Entgegenhaltungen:
- EP-A- 0 753 678
- EP-A- 1 167 737
- EP-A1- 0 243 683
- WO-A1-2005/093286
- DE-A1- 3 326 467
- DE-A1- 3 733 982
- DE-A1- 10 257 562
- DE-A1- 19 835 145
- JP-A- H09 151 993
- US-A- 5 628 577
- SOLFRANK P.: 'Neues erreichen mit "alten" Techniken' WÄLZLAGER IM HUBKOLBENMOTOR 2010, Seiten 288 - 301
- 'Technologie Highlights aus dem FEV-Arbeitsspektrum' FEV-SPECTRUM 23 April 2003, Seiten 1 - 8
- 'Reibleistungsreduktion Konstruktive Maßnahmen zur Verbrauchseinsparung' FORSCHUNG TRIBOLOGIE Seiten 592 - 597
- Bericht ATZ-Online, "BMW R 1200 GS: Boxermotor mit Ausgleichswelle", 13. Januar 2004
- JP 2005 016 644 A und zugehörige englische Übersetzung
- BRÄNDLEIN ET AL.: 'Die Wälzlagerpraxis - Handbuch für die Berechnung und Gestaltung von Lagerungen', Bd. 2, 1998, VEREINIGTE FACHVERLAGE GMBH, MAINZ Seiten 1-21 - 320-321
- BEITZ W. ET AL: 'Dubble - Taschenbuch für den Maschninenbau', Bd. 14, 1981, SPRINGER-VERLAG, BERLIN - HEIDELBERG - NEW YORK Seiten 425 - 427
- DOHMEN J. DIPL.-ING.: 'Untersuchungen zum reibungsoptimierten Triebwerk an Pkw-Verbernnungsmotoren', 2003

## Beschreibung

### Gebiet der Erfindung

Die Erfindung betrifft eine Radiallagerung einer in einem Gehäuse gelagerten Welle, welches Gehäuse und welche Welle um eine gemeinsame Längsachse relativ zueinander rotieren. Die Radiallagerung umfasst einen Lagersitz, der sich über einen Umfang von 360° erstreckt, relativ zu einer den Lagersitz in einer Lastzone beaufschlagenden Radiallast im wesentlichen stillsteht und in Richtung der Längsachse eine über dessen Umfang veränderliche Breite aufweist derart, dass der Lagersitz ausgehend von der Lastzone außerhalb der Lastzone deutlich verjüngt ist.

### Hintergrund der Erfindung

Eine Radiallagerung einer Unwuchtwelle mit den Merkmalen das Oberbegriffs das Anspruchs 1 ist aus der gattungsgemäßen JP 2005-16644 A bekannt.

In der DE 37 33 982 A1 ist eine Kolben-Pleuel-Verbindung einer Brennkraftmaschine vorgeschlagen. Aufgrund der gegenüber den Zugkräften sehr viel größeren Druckkräfte auf die Kolben-Pleuel-Verbindung ist der den Kolbenbolzen abstützende Lagersitz im kleinen Pleuelauge trapezförmig, d.h. sich in Richtung des Kolbenbodens verjüngend ausgebildet. Aus der EP 0 753 678 A2 geht eine Radiallagerung eines Gehäuses gegenüber einer darin gelagerten Zahnradwelle hervor, die an der Verzahnung mit einer bzgl. des Gehäuses stillstehenden Radiallast beaufschlagt ist. Der im Gehäuse ausgebildete Gleitlagersitz für die Zahnradwelle weist dementsprechend eine darauf stillstehende Lastzone auf und ist außerhalb der Lastzone deutlich verjüngt.

Ein solcher Belastungsfall der Radiallagerung ist im Stand der Technik grundsätzlich und im Falle der Wälzlagerung unter dem Begriff der sogenannten Punktlast bekannt, bei welcher die Radiallast in Abhängigkeit der Bewegungsverhältnisse gegenüber dem Innenring oder dem Außenring des Wälzlagers im wesentlichen still steht. Im Gegensatz dazu handelt es sich bei der sogenannten Umfangslast um einen Belastungsfall, bei welcher die Radiallast gegenüber dem Innenring oder dem Außenring des Wälzlagers rotiert. Mit dem Begriff "im wesentlichen" soll an dieser Stelle zum Ausdruck gebracht werden, dass die Radiallast aufgrund dynamischer Einflüsse streng genommen nicht punktförmig wirkt, sondern eine gewisse radiale Schwankungsbreite aufweisen kann.

Die von der auf dem Lagersitz ruhenden Lastzone zu übertragenden Kräfte infolge der Radiallast sind ein wesentliches Kriterium für eine lebensdauerfeste Dimensionierung der Breite des Lagersitzes. Dieses Kriterium spielt jedoch für die erforderliche Breite außerhalb der Lastzone eine nur noch untergeordnete Rolle, da hier der Lagersitz einer deutlich geringeren und im Einzelfall gar keiner mechanischen Belastung mehr unterworfen ist. Dennoch sind im Stand der Technik bekannte Lagersitze rotationssymmetrisch mit konstanter Breite ausgebildet und daher für den hier vorliegenden Belastungsfall der Punktlast hinsichtlich der mechanischen Belastbarkeit außerhalb der Lastzone überdimensioniert. Hieraus können sich wesentliche Nachteile dahingehend ergeben, dass der herstellbedingt meist erhaben ausgebildete Lagersitz eine sowohl technisch und finanziell unerwünschte als auch vermeidbare Masse außerhalb der Lastzone mitführt. Gleichzeitig führt dies zu einem unnötig hohen Bearbeitungsaufwand des Lagersitzes, der auch außerhalb der Lastzone vollständig über seine konstante Breite fein zu bearbeiten ist.

### Aufgabe der Erfindung

Aufgabe der Erfindung ist daher, eine Radiallagerung der eingangs genannten Art so auszugestalten, dass die zitierten Nachteile mit einfachen Mitteln beseitigt sind. Dabei soll die Gestaltung der Radiallagerung insbesondere zu Gewichts- und Kostenvorteilen gegenüber im Stand der Technik bekannten Lagerungen führen.

### Zusammenfassung der Erfindung

Erfindungsgemäß wird diese Aufgabe dadurch gelöst, dass die Welle als Unwuchtwelle und der Lagersitz veränderlicher Breite an der Unwuchtwelle ausgebildet sind. Dabei läuft die Radiallast mit der Unwuchtwelle um, deren zur Längsachse exzentrisch angeordneter Massenschwerpunkt aus einer oder mehreren Freinehmungen am Außenumfang der Unwuchtwelle resultiert. Die Freinehmungen verlaufen, auf den Massenschwerpunkt der Unwuchtwelle bezogen, teilweise oder vollständig jenseits der Längsachse der Unwuchtwelle und grenzen an den Lagersitz veränderlicher Breite unmittelbar an.

Zur Radiallagerung der Unwuchtwelle ist zumindest ein als Nadellager ohne Innenring und vorzugsweise als Nadelhülse ausgebildetes Wälzlager vorgesehen.

Bei diesem Belastungsfall handelt es sich um eine definierte, mit der Welle umlaufende Unwucht, die durch den Lagersitz veränderlicher Breite bei gleichzeitiger Massenreduzierung der Welle vorteilhaft verstärkt werden kann.

Mit einer so ausgebildeten Radiallagerung wird der Umstand optimal berücksichtigt, dass der mit Punktlast beaufschlagte Lagersitz außerhalb der Lastzone erheblich verjüngt werden und somit das Potenzial bekannter Lagerungen zur Reduzierung von rotativ bewegter Masse, Gewicht, Bearbeitungsaufwand und Kosten ausgeschöpft werden können, ohne die Funktionseigenschaften der Radiallagerung zu beeinträchtigen. Eine solche Beeinträchtigung wäre erst dann gegeben, wenn aufgrund der Verjüngung des Lagersitzes eine kritische Lagersitzbreite erreicht wird, unterhalb derer eine Dauerfestigkeit der Radiallagerung nicht mehr gewährleistet ist. Entscheidendes Kriterium hierfür kann im Falle einer als hydrodynamisches Gleitlager ausgebildeten Radiallagerung ein nicht mehr tragfähiger Schmierfilm oder im Falle des Wälzlagers eine unzulässig hohe Belastung des Lagersitzes außerhalb der Lastzone sein.

Mit einer derart ausgebildeten Unwuchtwelle kann der zumeist bestehende Zielkonflikt einer kleinstmöglichen Masse bei größtmöglicher Unwucht der Welle besonders vorteilhaft gelöst werden. Dies liegt im wesentlichen darin begründet, dass sich die Freinehmungen nunmehr bis an den verjüngten Lagersitz hin erstrecken und gleichsam als erhöhte negative Masse zur Verstärkung der Unwucht genutzt werden können. Dennoch eröffnet sich gegenüber herkömmlichen Wellen mit Lagersitzen konstanter Breite nicht nur die Möglichkeit, die Unwucht der Welle bei gleichzeitiger Massenreduzierung zu erhöhen. Vielmehr ist im Falle einer unveränderten Unwucht eine darüber noch erheblich hinausgehende Massenreduzierung der Welle dadurch möglich, dass die ursprüngliche Unwuchterhöhung durch weitere, die Masse reduzierende Freinehmungen kompensiert wird, die auf den Massenschwerpunkt bezogen jedoch diesseits der Längsachse an der Unwuchtwelle anzuordnen sind. Selbstverständlich kann auch eine zwischen diesen beiden Grenzfällen angesiedelte Abstimmung der Unwuchtwelle gefunden werden, je nachdem, ob der Auslegungsschwerpunkt eher auf einer moderaten Massenreduzierung bei deutlicher Unwuchterhöhung oder eher auf einer deutlichen Massenreduzierung bei unveränderter Unwuchterhöhung liegt.

In Weiterbildung der Erfindung soll die Unwuchtwelle zu einer Vorrichtung zum Ausgleich von Massenkräften und/oder Massenmomenten einer Hubkolben-Brennkraftmaschine mit einer parallel zur Längsachse der Unwuchtwelle angeordneten und die Unwuchtwelle zumindest mittelbar antreibenden Kurbelwelle der Hubkolben-Brennkraftmaschine gehören. Eine derartige Ausgleichsvorrichtung ist dem Fachmann auf dem Gebiet von Hubkolben-Brennkraftmaschinen insbesondere in Reihen- oder V-Anordnung als wirksame Maßnahme zur Reduzierung von Schwingungen in Folge oszillierender Massenkräfte bekannt. Insbesondere bei Hubkolben-Brennkraftmaschinen für den Fahrzeugbereich steigen jedoch die Anforderungen an die Leichtbaugüte der Hubkolben-Brennkraftmaschine zunehmend, so dass sich vorgenannte Möglichkeiten zur Massenreduzierung der Unwuchtwelle für diesen Einsatzfall besonders vorteilhaft nutzen lassen. Das geringere Massenträgheitsmoment der Unwuchtwelle führt darüber hinaus zu einer verbesserten Dynamik der Hubkolben-Brennkraftmaschine, da einem hohen Drehzahlgradienten weniger Widerstand entgegengesetzt wird. Außerdem lässt sich insbesondere bei Dieselmotoren mit ausgeprägten Drehschwingungen der Kurbelwelle im unteren Drehzahlbereich die mechanische Spitzenbelastung im Antriebsbereich der Ausgleichsvorrichtung mit verringertem Trägheitsmoment der Unwuchtwelle absenken.

Die vorgenannten Betrachtungen gelten in verstärktem Maße dann, wenn die Ausgleichsvorrichtung zwei Unwuchtwellen umfasst, die mit doppelter Kurbelwellendrehzahl gegenläufig rotieren. Diese dem Fachmann auch als Lancaster-Ausgleich bekannte Anordnung dient zum Ausgleich der freien Massenkräfte zweiter Ordnung bei einem Vierzylinder-Reihenmotor.

Zur Radiallagerung der Unwuchtwelle ist zumindest ein als Nadellager ohne Innenring und vorzugsweise als Nadelhülse ausgebildetes Wälzlager vorgesehen ist. Neben den günstigen Reibungseigenschaften des Wälzlagers gegenüber einem hydrodynamischen Gleitlager, das insbesondere bei tiefen Temperaturen und/oder hochviskosem Hydraulikmittel zu erheblichen Reibleistungsverlusten im Antrieb der Unwuchtwelle führen kann, lassen sich die Vorteile der Massenreduzierung und/oder der Unwuchterhöhung der Unwuchtwelle durch deren als Nadellagerung ausgebildete Radiallagerung noch weiter ausbauen, da der von einem Nadellager umfasste Lagersitz in der Regel stärker verjüngt werden kann, als es im Falle des hydrodynamischen Gleitlagers unter Berücksichtigung eines tragfähigen Schmierfilms möglich wäre. So erlaubt vor allem die Verwendung einer Nadelhülse, die dem Fachmann als Baueinheit kleinster radialer Bauhöhe mit spanlos geformtem Außenring und einem Nadelkranz bekannt ist, eine besonders Bauraum sparende und kostengünstige Radiallagerung der Unwuchtwelle bei ausreichender Dauerfestigkeit.

In weiterer Ausgestaltung der Erfindung kann es schließlich vorteilhaft sein, dass die Breite des Nadellagers im wesentlichen einer maximalen Breite des dem Nadellager zugeordneten Lagersitzes veränderlicher Breite entspricht, während eine minimale Breite des Lagersitzes kleiner als die Länge der Nadeln des Nadellagers ausgebildet ist. Gleichzeitig soll zur Schmierung des Nadellagers lediglich ein druckloser Schmiermittelnebel vorgesehen sein. Mit dieser Ausgestaltung der Erfindung lassen sich die Schmierbedingungen am Nadellager dadurch verbessern, dass die über den Lagersitz lokal und temporär überstehenden Nadeln dem drucklosen Schmiermittelnebel verstärkt ausgesetzt sind. Umgekehrt kann dies auch einem Austritt von abrasiven Partikeln aus dem Laufbahnbereich des Nadellagers zugunsten einer erhöhten Verschleißfestigkeit der Radiallagerung förderlich sein. Um im Bereich der minimalen Breite des Lagersitzes dessen vollständigen Längskontakt mit den Nadeln zu gewährleisten, ist bei dieser Ausgestaltung die Verwendung eines einreihigen Nadellagers gegenüber der eines mehrreihigen Nadellagers zu bevorzugen.

### Kurze Beschreibung der Zeichnungen

Weitere Merkmale der Erfindung ergeben sich aus der nachfolgenden Beschreibung und aus den Zeichnungen, in denen die erfindungsgemäße Radiallagerung und Radiallagerungen bei anderen Belastungsfällen jeweils grundlegend sowie eine erfindungsgemäße Radiallagerung beispielhaft anhand einer Unwuchtwelle einer Vorrichtung zum Massenausgleich einer Hubkolbenbrennmaschine vereinfacht dargestellt sind. Es zeigen:
- Figur 1: die Radiallagerung für den erfindungsgemäßen Belastungsfall in schematischer Darstellung;
- Figur 2: eine Radiallagerung für einen zweiten Belastungsfall in schematischer Darstellung;
- Figur 3: eine Radiallagerung für einen dritten Belastungsfall in schematischer Darstellung;
- Figur 4: eine Radiallagerung für einen vierten Belastungsfall in schematischer Darstellung;
- Figur 5: die Vorrichtung zum Massenausgleich einer HubkolbenBrennkraftmaschine in schematischer Darstellung;
- Figur 6: eine der Unwuchtwellen aus Figur 5 in vereinfachter Längsdarstellung;
- Figur 7: den Schnitt AA aus Figur 6 in vergrößerter Darstellung.

### Ausführliche Beschreibung der Zeichnungen

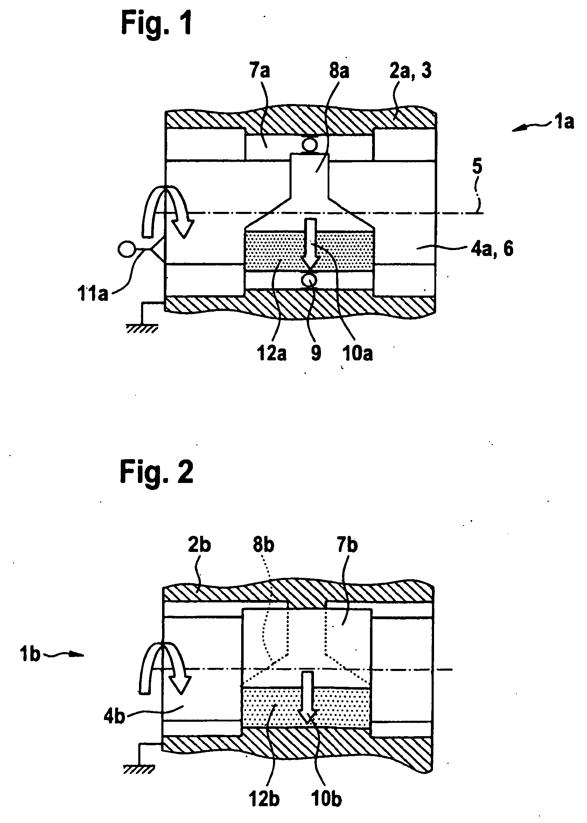

In Figur 1 ist eine erfindungsgemäße Radiallagerung 1a für den erfindungsgemäßen Belastungsfall offenbart. Dargestellt ist ein als Gehäuse 2a ausgebildetes Außenteil 3, in dem ein als Welle 4a ausgebildetes und um eine Längsachse 5 rotierendes Innenteil 6 radial gelagert ist. Zwischen einem im Gehäuse 2a ausgebildeten Lagersitz 7a und einem an der Welle 4a ausgebildeten Lagersitz 8a ist in dem gezeigten Ausführungsbeispiel ein Wälzlager 9 angeordnet, das auch in den Radiallagerungen 1b, 1c, 1d gemäß den Figuren 2-4 als Lagermittel einsetzbar ist. Eine mit der Welle 4a umlaufende Radiallast 10a infolge einer an der Welle 4a angeordneten Unwucht 11a führt zu Umfangslast am Lagersitz 7a des Gehäuses 2a, während die Radiallast 10a relativ zum Lagersitz 8a der Welle 4a und einer darauf ausgebildeten Lastzone 12a (gepunktet dargestellt) im wesentlichen stillsteht. Während der Lagersitz 7a des Gehäuses 2a aufgrund der Umfangslast rotationssymmetrisch ausgebildet ist, weist der mit Punktlast beaufschlagte Lagersitz 8a der Welle 4a eine über dessen Umfang veränderliche Breite auf, indem der Lagersitz 8a ausgehend von der Lastzone 12a außerhalb dieser deutlich verjüngt ist. Dadurch, dass sich die Lastzone 12a über einen Winkel von maximal 180° am Umfang des Lagersitzes 8a der Welle 4a erstreckt - wobei dieser Winkel im dargestellten Fall der Wälzlagerung aufgrund des in der Praxis auftretenden Lagerspiels auch deutlich unterhalb dieses Wertes liegen kann - ist das Wälzlager 9 außerhalb der Lastzone 12a deutlich geringer und im Grenzfall gar nicht belastet.

Der in Figur 2 dargestellte Belastungsfall einer Radiallagerung 1b entspricht demjenigen Belastungsfall, der der in der eingangs genannten EP 0 753 678 A1 offenbarten Radiallagerung zugrunde liegt. Diese Radiallagerung unterscheidet sich von derjenigen gemäß Figur 1 dadurch, dass eine in einem Gehäuse 2b gelagerte Welle 4b mit einer gegenüber dem Gehäuse 2b still stehenden Radiallast 10b beaufschlagt ist. Demnach liegt an einem rotationssymmetrisch ausgebildeten Lagersitz 7b der Welle 4b Umfangslast an, während das Gehäuse 2b einen Lagersitz 8b (gepunktet dargestellt) veränderlicher Breite mit still stehender Lastzone 12b (gepunktet dargestellt) aufweist.

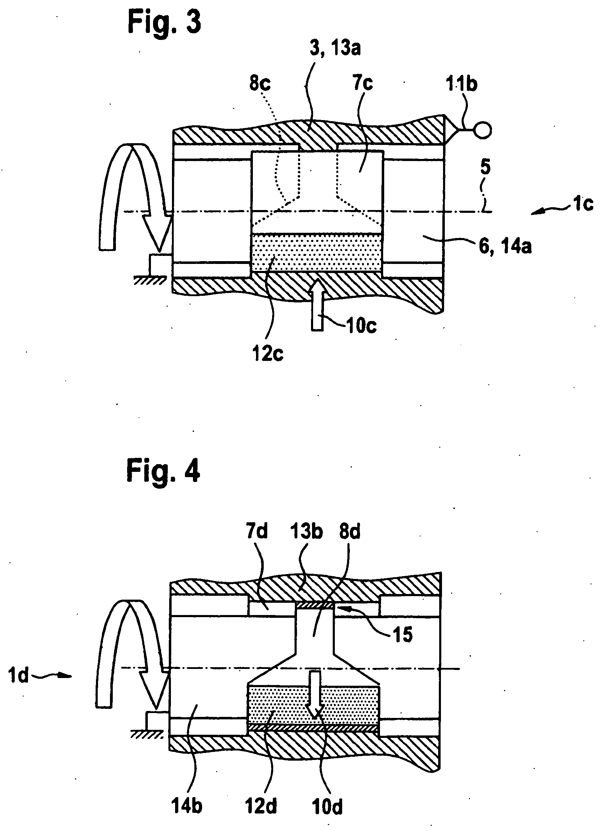

Bei dem in Figur 3 dargestellten Belastungsfall einer Radiallagerung 1c ist das Außenteil 3 als um die Längsachse 5 rotierende Nabe 13a und das Innenteil 6 als ein in der Nabe 13a lagernder Achsbolzen 14a ausgebildet. Dabei wird ein rotationssymmetrischer Lagersitz 7c des Achsbolzens 14a mit einer Umfangslast erzeugenden Radiallast 10c infolge einer an der Nabe 13a angeordneten Unwucht 11 b belastet. Demgegenüber weist ein mit Punktlast beaufschlagter Lagersitz 8c (gepunktet dargestellt) der Nabe 13a eine über den Umfang veränderliche Breite auf, indem der Lagersitz 8c ausgehend von einer Lastzone 12c (gepunktet dargestellt) außerhalb dieser deutlich verjüngt ist.

Schließlich unterscheidet sich der in Figur 4 dargestellte Belastungsfall einer Radiallagerung 1d von derjenigen gemäß Figur 3 dadurch, dass ein Achsbolzen 14b mit einer ihm gegenüber still stehenden Radiallast 10d beaufschlagt ist. Entsprechend ist in einer um den Achsbolzen 14b rotierenden Nabe 13b ein mit Umfangslast beaufschlagter Lagersitz 7d konstanter Breite ausgebildet, während ein Lagersitz 8d des Achsbolzens 14b mit Punktlast beaufschlagt ist und eine über den Umfang veränderliche Breite aufweist, indem der Lagersitz 8d ausgehend von einer Lastzone 12d (gepunktet dargestellt) außerhalb dieser deutlich verjüngt ist. Als Alternative zu dem in Figur 1 dargestellten Wälzlager 9 ist hierbei zwischen den Lagersitzen 7d und 8d ein hydrodynamisches Gleitlager 15 als Lagermittel ausgebildet. Selbstverständlich kann das Gleitlager 15 auch in den anderen Belastungsfällen gemäß den Figuren 1-3 als Lagermittel Verwendung finden.

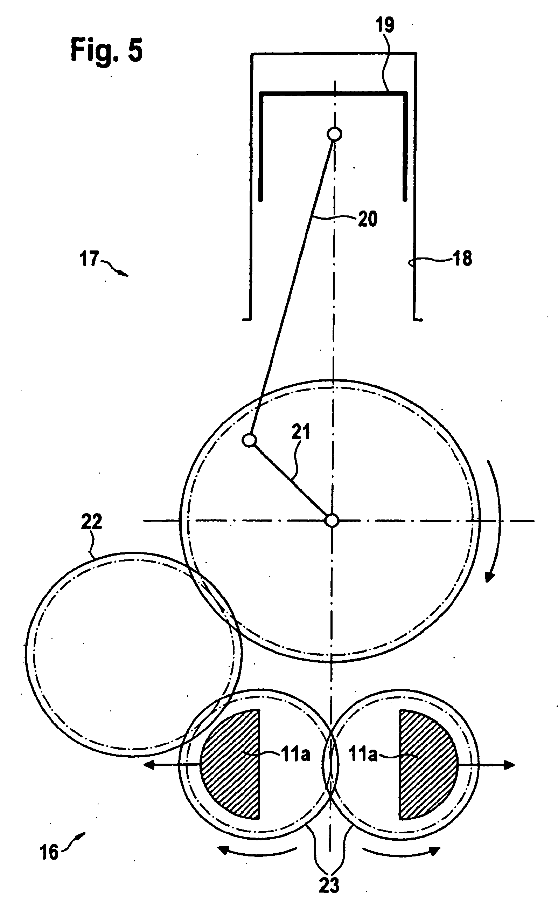

Der in Figur 1 dargestellte Belastungsfall kann unter anderem in der in Figur 5 prinzipiell dargestellten Vorrichtung 16 auftreten. Diese Vorrichtung 16 dient zum Ausgleich von Massenkräften zweiter Ordnung einer anhand eines Getriebeschemas dargestellten Hubkolben-Brennkraftmaschine 17 in Vierzylinder-Reihenbauweise (Lancaster-Ausgleich). Die Hubkolben-Brennkraftmaschine 17 umfasst einen in einem Zylinder 18 oszillierenden Kolben 19, dessen Längsbewegung über ein Pleuel 20 in eine Rotation einer Kurbelwelle 21 umgesetzt wird. Die Kurbelwelle 21 treibt über eine Zwischenwelle 22 zwei Unwuchtwellen 23 mit den Unwuchten 11a an, wobei die Unwuchtwellen 23 parallel zur Kurbelwelle 21 mit doppelter Kurbelwellendrehzahl gegenläufig rotieren.

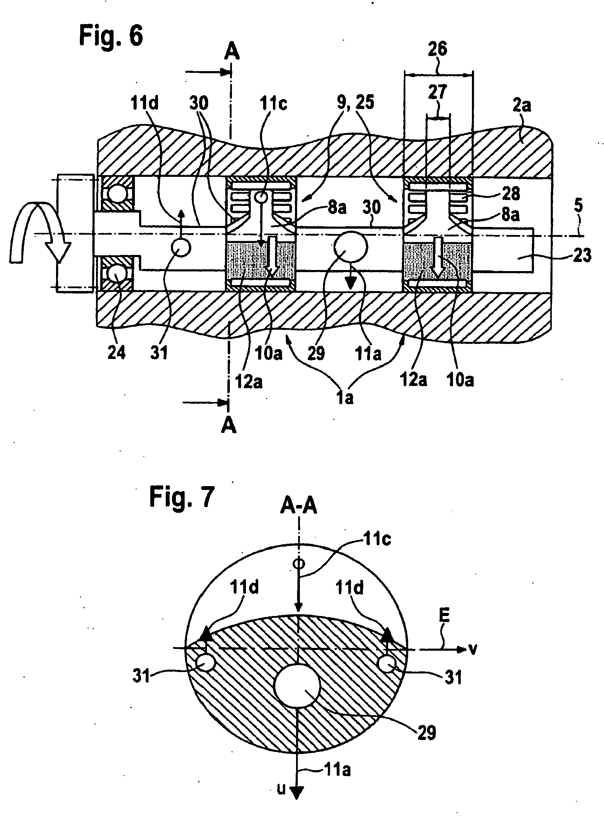

Die Lagerung einer dieser Unwuchtwellen 23 geht detaillierter aus deren Längsdarstellung gemäß Figur 6 hervor. Eine Axiallagerung der Unwuchtwelle 23 erfolgt antriebsseitig über ein Kugellager 24 und deren Radiallagerung 1a über zwei als Nadelhülsen 25 ausgebildete und in das Gehäuse 2a der Hubkolben-Brennkraftmaschine 17 eingepresste Wälzlager 9. Von den Nadelhülsen 25 umfasste Lagersitze 8a der Unwuchtwelle 23 weisen eine über deren Umfang veränderliche Breite derart auf, dass sie außerhalb von mit Punktlast beaufschlagen Lastzonen 12a (gepunktet dargestellt) infolge der Radiallasten 10a aus der mit der Unwuchtwelle 23 umlaufenden Unwucht 11 a deutlich verjüngt sind. Die Breite jeder Nadelhülse 25 ist dabei so bemessen, dass sie einer maximalen Breite 26 des zugehörigen Lagersitzes 8a im Bereich von dessen Lastzone 12a entspricht, während eine minimale Breite 27 des Lagersitzes 8a außerhalb der Lastzone 12a deutlich kleiner als die Länge der Nadeln 28 der Nadelhülse 25 ausgebildet ist. Da lediglich ein druckloser Schmiermittelnebel innerhalb des Gehäuses 2a vorgesehen ist, können die Schmierbedingungen an den lokal und temporär überstehenden Nadeln 28 erheblich verbessert werden.

Die in Pfeilrichtung wirkende Unwucht 11a der Unwuchtwelle 23 basiert auf einem zu ihrer Längsachse 5 exzentrischen und in Figur 6 symbolhaft dargestellten Massenschwerpunkt 29. Dessen Exzentrizität resultiert aus Freinehmungen 30 am Außenumfang der Unwuchtwelle 23, welche auf den Massenschwerpunkt 29 bezogen teilweise oder vollständig jenseits der Längsachse 5 verlaufen. Da die Freinehmungen 30 unmittelbar an die Lagersitze 8a angrenzen, führt die Verjüngung der Lagersitze 8a jenseits der Längsachse 5 sowohl zu einer vorteilhaften Massenreduzierung als auch zu einer zusätzlichen Unwucht 11 c gegenüber einer Unwuchtwelle mit Lagersitzen konstanter Breite. Abhängig von den gewünschten Eigenschaften der Vorrichtung 16 kann diese zusätzliche Unwucht 11 c in einer Bandbreite genutzt werden, die sich zwischen den Grenzfällen eines verbesserten Massenausgleichs durch maximale Erhöhung der Unwucht 11a bei gleichzeitig reduzierter Masse der Unwuchtwelle 23 einerseits und einer maximalen Massenreduzierung bei konstanter Unwucht 11 a der Unwuchtwelle 23 andererseits erstreckt.

Eine konstruktive Auslegung im Bereich des zweiten Grenzfalls ist in dem vorliegenden Ausführungsbeispiel in Form einer die zusätzliche Unwucht 11 c kompensierenden Unwucht 11 d symbolhaft dargestellt. Wie auch aus Figur 7 ersichtlich, ist die kompensierende Unwucht 11 d als wenigstens ein Paar von zur Unwuchtrichtung u spiegelsymmetrischen Freinehmungen 31 ausgebildet. Diese sind außerhalb der Lagersitze 8a und auf den Massenschwerpunkt 29 bezogen zumindest überwiegend diesseits der Längsachse 5 am Außenumfang der Unwuchtwelle 23 angeordnet und wirken somit in entgegengesetzter Richtung zur Unwucht 11a des Massenschwerpunkts 29. Im Hinblick auf die maximale Massenreduzierung der Unwuchtwelle 23 ist es dabei zweckmäßig, die Freinehmungen 31 in der Nähe einer Ebene E anzuordnen, die durch die Längsachse 5 und einer zur Unwuchtrichtung u orthogonalen Richtung v aufgespannt ist. Die dort angeordneten Freinehmungen 31 weisen eine vergleichsweise kleine wirksame Exzentrizität zur Längsachse 5 auf, so dass deren in Unwuchtrichtung u negativ wirkende Masse bei konstantem Kompensationsgrad entsprechend groß zugunsten der Massenreduzierung der Unwuchtwelle 23 gewählt werden kann.

### Liste der Bezugszahlen und -zeichen

- 1 a,b,c,d: Radiallagerung
- 2a,b: Gehäuse
- 3: Außenteil
- 4a,b: Welle
- 5: Längsachse
- 6: Innenteil
- 7a,b,c,d: Lagersitz
- 8a,b,c,d: Lagersitz
- 9: Wälzlager
- 10a,b,c,d: Radiallast
- 11 a,b,c,d: Unwucht
- 12a,b,c,d: Lastzone
- 13a,b: Nabe
- 14a,b: Achsbolzen
- 15: Gleitlager
- 16: Vorrichtung
- 17: Hubkolben-Brennkraftmaschine
- 18: Zylinder
- 19: Kolben
- 20: Pleuel
- 21: Kurbelwelle
- 22: Zwischenwelle
- 23: Unwuchtwelle
- 24: Kugellager
- 25: Nadelhülse
- 26: maximale Breite
- 27: minimale Breite
- 28: Nadel
- 29: Massenschwerpunkt
- 30: Freinehmung
- 31: Freinehmung

- E: Ebene
- u: Unwuchtrichtung
- v: zur Unwucht orthogonale Richtung

## Patentansprüche

1. Radiallagerung (1a) einer in einem Gehäuse gelagerten Welle (4a), welches Gehäuse (2a) und welche Welle (4a) um eine gemeinsame Längsachse (5) relativ zueinander rotieren, wobei die Radiallagerung (1 a) einen Lagersitz (8a) umfasst, der sich über einen Umfang von 360° erstreckt, relativ zu einer den Lagersitz (8a) in einer Lastzone (12a) beaufschlagenden Radiallast (10a) im wesentlichen stillsteht und in Richtung der Längsachse (5) eine über dessen Umfang veränderliche Breite aufweist derart, dass der Lagersitz (8a) ausgehend von der Lastzone (12a) außerhalb der Lastzone (12a) deutlich verjüngt ist, wobei die Welle (4a) als Unwuchtwelle (23) und der Lagersitz (8a) veränderlicher Breite an der Unwuchtwelle (23) ausgebildet sind und wobei die Radiallast (10a) mit der Unwuchtwelle (23) umläuft, deren zur Längsachse (5) exzentrisch angeordneter Massenschwerpunkt (29) aus einer oder mehreren Freinehmungen (30) am Außenumfang der Unwuchtwelle (23) resultiert, welche Freinehmungen (30), auf den Massenschwerpunkt (29) der Unwuchtwelle (23) bezogen, teilweise oder vollständig jenseits der Längsachse (5) der Unwuchtwelle (23) verlaufen und an den Lagersitz (8a) veränderlicher Breite unmittelbar angrenzen, **dadurch gekennzeichnet, dass** zur Radiallagerung (1a) der Unwuchtwelle (23) zumindest ein als Nadellager ohne Innenring und vorzugsweise als Nadelhülse (25) ausgebildetes Wälzlager (9) vorgesehen ist.

2. Radiallagerung nach Anspruch 1**, dadurch gekennzeichnet, dass** die Breite des Nadellagers ( 25) im wesentlichen einer maximalen Breite (26) des dem Nadellager ( 25) zugeordneten Lagersitzes (8a) veränderlicher Breite entspricht, während eine minimale Breite (27) des Lagersitzes (8a) kleiner als die Länge der Nadeln (28) des Nadellagers ( 25) ausgebildet ist, wobei zur Schmierung des Nadellagers ( 25) lediglich ein druckloser Schmiermittelnebel vorgesehen ist.

## Claims

1. Radial mounting (1a) of a shaft (4a) mounted in a housing, which housing (2a) and which shaft (4a) rotate in relation to each other about a common longitudinal axis (5), the radial mounting (1a) comprising a bearing seat (8a) which extends over a circumference of 360°, remains substantially stationary in relation to a radial load (10a) that acts on the bearing seat (8a) in a load zone (12a) and has a width that varies over its circumference in the direction of the longitudinal axis (5) in such a way that, starting from the load zone (12a), the bearing seat (8a) tapers significantly outside the load zone (12a), wherein the shaft (4a) is formed as an eccentric shaft (23) and the bearing seat (8a) of variable width is formed on the eccentric shaft (23) and wherein the radial load (10a) rotates with the eccentric shaft (23), the centre of mass (29) of which, which is arranged eccentrically in relation to the longitudinal axis (5), results from one or more recesses (30) on the outer circumference of the eccentric shaft (23), which recesses (30) extend partially or completely on the opposite side of the longitudinal axis (5) of the eccentric shaft (23), with respect to the centre of mass (29) of the eccentric shaft (23), and directly adjoin the bearing seat (8a) of variable width, **characterized in that** at least one rolling bearing (9) formed as a needle bearing without an inner race, and preferably as a needle bush (25), is provided for the radial mounting (1a) of the eccentric shaft (23).

2. Radial mounting according to Claim 1, **characterized in that** the width of the needle bearing (25) corresponds substantially to a maximum width (26) of the bearing seat (8a) of variable width assigned to the needle bearing (25), while a minimum width (27) of the bearing seat (8a) is formed less than the length of the needles (28) of the needle bearing (25), a pressureless lubricant mist being all that is provided for the lubrication of the needle bearing.

## Revendications

1. Support de palier radial (1a) pour un arbre (4a) monté dans un boîtier, lequel boîtier (2a) et lequel arbre (4a) tournent l'un par rapport à l'autre autour d'un axe longitudinal commun (5), le support de palier radiale (1a) comprenant un siège de palier (8a), qui s'étend sur un pourtour de 360°, est essentiellement immobile par rapport à une charge radiale (10a) sollicitant le siège de palier (8a) dans une zone de charge (12a) et présentant dans la direction de l'axe longitudinal (5) une largeur variable sur sa périphérie, de telle sorte que le siège de palier (8a) se rétrécisse nettement depuis la zone de charge (12a) jusqu'en dehors de la zone de charge (12a), dans lequel l'arbre (4a) est réalisé sous forme d'arbre de déséquilibre (23) et le siège de palier (8a) de largeur variable est réalisé sur l'arbre de déséquilibre (23) et dans lequel la charge radiale (10a) tourne avec l'arbre de déséquilibre (23), dont le centre de masse (29) disposé de manière excentrée par rapport à l'axe longitudinal (5) résulte d'un ou de plusieurs évidements (30) sur la périphérie extérieure de l'arbre de déséquilibre (23), lesquels évidements (30), par rapport au centre de masse (29) de l'arbre de déséquilibre (23), s'étendant en partie ou complètement de chaque côté de l'axe longitudinal (5) de l'arbre de déséquilibre (23) et étant directement adjacents au siège de palier (8a) de largeur variable, **caractérisé en ce que** pour le support de palier radial (1a) de l'arbre de déséquilibre (23), on prévoit au moins un palier à roulement (9) réalisé sous forme de palier à aiguille sans bague interne et de préférence sous forme de palier à roulement (9) réalisé en tant que douille à aiguille (25).

2. Support de palier radial selon la revendication 1, **caractérisé en ce que** la largeur du palier à aiguille (25) correspond essentiellement à une largeur maximale (26) du siège de palier (8a) de largeur variable associé au palier à aiguille (25), tandis qu'une largeur minimale (27) du siège de palier (8a) est inférieure à la longueur des aiguilles (28) du palier à aiguille (25), seule un nuage de lubrifiant sans pression étant utilisé pour la lubrification du palier à aiguille (25).
